# EUROPÄISCHE PATENTSCHRIFT

(11) **EP 2 864 378 B1**
(45) Veröffentlichungstag und Bekanntmachung des Hinweises auf die Patenterteilung: **01.06.2016**
(21) Anmeldenummer: 13791895.9
(22) Anmeldetag: 24.06.2013
(51) Int. Cl.: C08F 36/22, C08K 5/00, C08K 5/13, C08L 23/02

(54) **STABILISATOR FÜR POLYOLEFINE SOWIE VERFAHREN ZUR HERSTELLUNG EINES SOLCHEN STABILISATORS**
STABILIZER FOR POLYOLEFINS AND PROCESS FOR PREPARING SUCH A STABILIZER
AGENT DE STABILISATION DE POLYOLÉFINES ET PROCÉDÉ DE FABRICATION DUDIT AGENT DE STABILISATION DE POLYOLÉFINES

(30) Priorität: 25.06.2012 AT 502462012
(43) Veröffentlichungstag der Anmeldung: 29.04.2015
(73) Patentinhaber: KE KELIT Kunststoffwerk Gesellschaft m.b.H., 4020 Linz (AT)
(72) Erfinder: BEER, Stephan, A-4020 Linz (AT); TEASDALE, Ian, A-4040 Linz (AT); BRÜGGEMANN, Oliver, A-4073 Wilhering (AT); RAMETSTEINER, Karl, A-4040 Linz (AT)
(74) Vertreter: Patentanwaltskanzlei Hübscher
(86) Internationale Anmeldenummer: PCT/AT2013/050124
(87) Internationale Veröffentlichungsnummer: WO 2014/000008

(56) Entgegenhaltungen:
- XUE ET AL: "Synthesis and radical scavenging ability of new polymers from sterically hindered phenol functionalized norbornene monomers via ROMP", POLYMER, ELSEVIER SCIENCE PUBLISHERS B.V, GB, Bd. 48, Nr. 17, 3. August 2007 (2007-08-03), Seiten 5005-5015, XP022183996, ISSN: 0032-3861, DOI: 10.1016/J.POLYMER.2007.04.074
- MARK D. WATSON ET AL: "Functionalized Polyethylene via Acyclic Diene Metathesis Polymerization: Effect of Precise Placement of Functional Groups", MACROMOLECULES, Bd. 33, Nr. 24, 1. November 2000 (2000-11-01), Seiten 8963-8970, XP055095605, ISSN: 0024-9297, DOI: 10.1021/ma0010332
- AL-MALAIKA S ET AL: "Reactive processing of polymers: mechanisms of grafting reactions of functional antioxidants on polyolefins in the presence of a coagent", POLYMER DEGRADATION AND STABILITY, BARKING, GB, Bd. 49, Nr. 1, 1. Januar 1995 (1995-01-01) , Seiten 77-89, XP027286615, ISSN: 0141-3910 [gefunden am 1995-01-01]

## Beschreibung

Die Erfindung bezieht sich auf einen Stabilisator für Polyolefine unter Verwendung phenolischer Antioxidantien sowie auf ein Verfahren zur Herstellung des Stabilisators.

Der Kontakt mit Sauerstoff bedingt bei Kunststoffen eine oxidative Degradation, die eine Veränderung der Werkstoffeigenschaften mit sich bringt. Beim geschwindigkeitsbestimmenden Schritt der Autoxidation handelt es sich um die Wasserstoffabspaltung von der Polymerkette durch ein Peroxyradikal, was zur Ausbildung eines polymergebundenen Hydroperoxids und letztlich zum Kettenbruch führt. Bei Zugabe von Wasserstoffdonatoren mit leicht abzuspaltenden Wasserstoffatomen wird diese Wasserstoffabspaltung von der Polymerkette unterbunden, da stattdessen der zugesetzte Wasserstoffdonator verbraucht wird.

Bei der Stabilisierung von Polymeren werden neben aromatischen Aminen vor allem phenolische Antioxidantien als Wasserstoffdonatoren eingesetzt. Die entscheidende Reaktion ist die Bildung des Hydroxyperoxids durch Wasserstoffabspaltung vom Phenol unter Ausbildung eines Phenoxyradikals. Die Stabilität des Phenoxyradikals wird durch die sterische Hinderung der Substituenten in den 2,6-Positionen bestimmt, wobei insbesondere 2,6-Di-tert-butylgruppen eine gute Stabilisierung bewirken. Die Alterungsbeständigkeit eines Polymers wird in diesem Zusammenhang neben dem Verbrauch von Stabilisatoren auch durch den physischen Verlust der eingesetzten Additive bestimmt. Für gute Antioxidantien sind daher eine gute Löslichkeit und eine gleichmäßige Verteilung im Polymer, eine geringe Diffusionsrate und geringe Flüchtigkeit zu fordern. Dabei wird die Effektivität der Stabilisierung insbesondere durch die Molmasse der Antioxidantien beeinflusst, weshalb Antioxidantien mit höherer Molmasse zum Einsatz kommen, beispielsweise ein Pentaerythritol-tetrakis[3-(3,5-di-tert-butyl-4-hydroxyphenyl)propionat] mit einer Molmasse von 1177,67. Unter aggressiveren Einsatzbedingungen (z.B. in Kontakt mit Heißwasser) kommt es allerdings auch bei diesen Antioxidantien zu einem physischem Verlust aufgrund von Auswaschprozessen. Deshalb ist die Immobilisierung der Antioxidantien von besonderer Bedeutung. Obwohl hierfür unterschiedliche Möglichkeiten bekannt sind, empfiehlt sich zur Immobilisierung eine Anbindung der Antioxidantien an die Polymerketten. Im Fall von Polyolefinen müssen wegen der fehlenden Funktionalitäten entlang der Polymerkette die Antioxidantien selbst polymerisierbare Funktionalitäten aufweisen. Die Anbindung der Antioxidantien an eine Polyolefinkette erfolgt über ein Aufpropfen in Gegenwart eines Initiators, üblicherweise ein Peroxid. Diese Radikalreaktion findet bevorzugt in der Polymerschmelze statt, wobei die notwendigen polymerisierbaren Funktionalitäten an den Antioxidantien durch deren Kopplung an Acrylate, Maleimide oder Maleate sichergestellt wird. Nachteilig ist allerdings, dass die Anbindung der Antioxidantien an die Polyolefinketten zufällig nach einer statistische Verteilung und mit einer vergleichsweise geringen Verteilungsdichte erfolgt.

Der Erfindung liegt somit die Aufgabe zugrunde, einen Stabilisator für Polyolefine anzugeben, der phenolische Antioxidantien mit einem hohen Molekulargewicht aufweist und eine für die Langzeitwirkung wesentliche Immobilität der Antioxidantien sicherstellt.

Die Erfindung löst die gestellte Aufgabe dadurch, dass die phenolischen Antioxidantien nach der Strukturformel 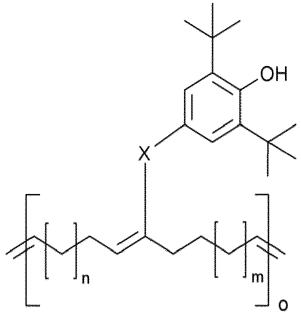 als Seitenketten an ein Polymer gebunden sind, wobei
X für [-CH₂-Y-COCH=CH-], [-CH₂-Y-CO-(CH₂)ₚ-] oder [-CH₂-Y-(CH₂)ₚ-] mit Y = S, O oder NH und mit p = 0 - 10 steht und
n = 1 - 8, m = 1 - 8 und o = 5 - 100 sind.

Aufgrund der angegebenen Polymerstruktur sind die phenolischen Antioxidantien auf der Basis eines 3,5-Di-tert-butyl-4-hydroxyphenyls als Seitenketten an die Polymerkette gebunden, was die angestrebte Immobilität der Antioxidantien sicherstellt. Außerdem können die Antioxidantien entlang der Polymerkette in einer vorgebbaren Verteilungsdichte je nach den Anforderungen regelmäßig verteilt werden, wobei sich eine weitgehend freie Wahl der Molmasse der Antioxidantien ergibt. Das Polymerrückgrat der erfindungsgemäßen polymergebundenen Antioxidantien besteht aus Kohlenstoff. Heteroatome kommen im Rückgrat nicht vor. Die Abwesenheit von Heteroatomen im Polymerrückgrat ist aufgrund der besseren Kompatibilität mit Polyolefinen von Vorteil. Erfindungsgemäße Stabilisatoren mit den polymergebundenen Antioxidantien können somit erfolgreich als Additiv den Polyolefinen zugesetzt werden.

Wird als phenolisches Antioxidans eine 3,5-Di-tert-butyl-4-hydroxyzimtsäure eingesetzt, so erhält man als weiteren Vorteil, dass zusätzliche Doppelbindungen als Reaktionszentren vorliegen. Gute Ergebnisse werden in diesem Zusammenhang auch mit einer 3-(3,5-Di-tert-butyl-4-hydroxyphenyl)propionsäure erzielt.

Zur Herstellung eines erfindungsgemäßen Stabilisators können die phenolischen Antioxidantien an die funktionellen Gruppen einer Polymerkette angekoppelt werden, die durch eine acyclische Dienmetathese-Polymerisation eines Dienderivats erhalten wird. Es ist aber auch möglich, die phenolischen Antioxidantien zunächst an α,ω,-Dienmonomere anzukoppeln, bevor die erhaltenen, an die α,ω-Dienmonomere angekoppelten Antioxidansstrukturen durch eine acyclische Dienmetathese-Polymerisation zu einer Polymerkette umgesetzt werden, was einfachere Verfahrensbedingungen mit sich bringt.

Bei der acyclische Dienmetathese-Polymerisation (ADMET-Polymerisation) handelt es sich um eine Stufenwachstumspolymerisation. Für die Erreichung hoher Molmassen sind wie bei allen Stufenwachstumspolymerisationen hohe Monomerumsätze notwendig. Als Monomere werden α,ω-Diene eingesetzt, was die Synthese von exakt definiertem, linearem, ungesättigtem Polyethylen ermöglicht.

Bei den für die ADMET-Polymerisation am häufigsten eingesetzten Katalysatoren handelt es sich um Ruthenium- und Alkylidenkomplexe. Rutheniumkatalysatoren weisen in der ADMET-Polymerisation eine große Toleranz gegenüber funktionellen Gruppen auf, sodass die Möglichkeit besteht, Monomere zu polymerisieren, die funktionelle Gruppen wie Ketone, Aldehyde, Alkohole, Ester, Carbonsäuren, Ether, Amide, Siloxane und Silylchloride enthalten.

Aufgrund der typischen Dienstrukturen der Monomere eröffnet sich die Möglichkeit zum Einsatz von Fettsäurederivaten auf der Basis von Pflanzenölen, wobei sich Rizinusöl als Triglycerid der Ricinolsäure anbietet. Die durch Pyrolyse der Ricinolsäure gewinnbare 10-Undecensäure kann nämlich in bekannter Weise durch Reduktion in das entsprechende Undecenaldehyd übergeführt werden, um das Undecenal über eine Aldolkondensation zum α,ω-Dienal und durch eine weitere Reduktion zum α,ω-Dienol umzusetzen, die beide als Ausgangsmonomere für eine ADMET-Polymerisation geeignet sind.

Bei der Ankopplung der Antioxidantien an für die ADMET-Polymerisation geeignete Monomere wird ausgehend von 10-Undecenal ein α,ω-Dien hergestellt, dieses aber nicht sofort polymerisiert. Stattdessen erfolgen die Reduktion des Aldehyds zum Alkohol und die anschließende Kopplung mit den Antioxidans. Bei der Kopplung zwischen Monomeren und Antioxidantien können Ester, aber auch andere Bindungen, wie Ether, Thioether, Amine oder Amide eingesetzt werden. Die an das α,ω-Dien gekoppelte Antioxidansstruktur wird daraufhin in einer ADMET-Polymerisation umgesetzt, um polymergebundene, immobilisierte Antioxidantien zu synthetisieren.

Das nachfolgende Beispiel zeigt die Strukturformel für ein solches polymergebundenes Antioxidans, wobei im dargestellten Molekül 3,5-Di-tert-butyl-4-hydroxyzimtsäure als Antioxidans eingesetzt und über einen Ester an die Polymerkette angebunden wird:

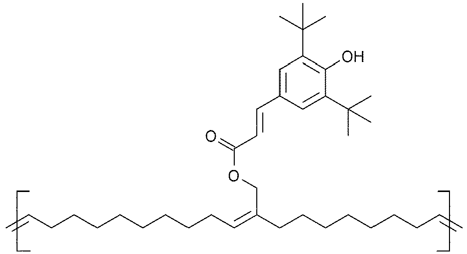

Die mittlere Molmasse der Polymere ist abhängig von der Reaktionsdauer, der Temperatur, der eingesetzten Katalysatormenge und dem Anteil an monofunktionalen Monomeren, die das Wachstum der Polymerkette begrenzen und als "Chainstopper" bezeichnet werden. Da nicht zu langkettige Polymere angestrebt werden, können 1-Dodecene oder 10-Methylundecenoat als "Chainstopper" bei der Reaktion zugegeben werden, um die mittlere Molmasse der immobilisierten Antioxidantien zu regulieren. Damit kann die Verträglichkeit mit den zu stabilisierenden Polymeren einfach geregelt werden. Üblicherweise werden Molekulargewichte zwischen 5000 und 50000 in Korrelation mit dem zu stabilisierenden Polyolefin eingestellt.

### Beispiel:

Es werden zunächst in bekannter Weise α,ω-Diene hergestellt, nämlich ein (Z)-2-(non-8-enyl)trideca-2,12-dienal sowie ein (Z)-2-(non-8-enyl)trideca-2,12-dienol.

In einer typischen Reaktion werden 3,80 g des zuvor hergestellten α,ω-Diens (Z)-2-(non-8-enyl)trideca-2,12-dienol und 3,29 g (11,93 mmol) des Antioxidans 3,5-Di-tert-butyl-4-hydroxyzimtsäure in 50 ml CH₂Cl₂ gelöst und im Rundkolben vorgelegt. Das Reaktionsgemisch wird unter N₂ im Eisbad gerührt und nach 5 min erfolgt die Zugabe von 2,58 g (12,5 mmol) N,N'-Dicyclohexylcarbodiimid (DCC) und 0,153 g (1,25 mmol) 4-(Dimethylamino)-pyridin (DMAP) in 20 ml CH₂Cl₂. Nach 48 h Rühren bei Raumtemperatur unter N₂, erfolgt die Aufarbeitung des Reaktionsgemisches. Dazu wird zuerst der ausgefällte N,N'-Dicyclohexylharnstoff abfiltriert und anschließend das Lösungsmittel verdampft. In weiterer Folge wird das Produkt in einem Gemisch aus Ethylacetat und Petrolether (1:1) aufgenommen und über Kieselgur filtriert. Nach Verdampfen des Lösungsmittels erhält man 5,5 g des Produkts in Form eines gelben, viskosen Öls. 1 H NMR (CDCl₃, 300 MH/): δ (ppm) = 1,20 - 1,50 (m, 40 H, 11 CH₂ + 6 CH₃), 1,98 - 2,15 (m, 8 H, 4 CH₂), 4,63 (s, 2 H, CH₂), 4,90 - 5,05 (m, 4 H, 2 CH₂), 5,51 (m, 1 H, CH), 5,74 - 5,90 (m, 2 H, 2 CH), 6,30 - 6,35 (d, 1 H, CH), 7,38 (s, 2 H, Aromat), 7,63 - 7,69 (d, 1 H, CH).

Für die Polymerisation der monomergebundenen Antioxidantien werden unter Luftausschluss 5,41 mg (0,0086 mmol = 1 mol% bezogen auf Monomer) des Hoveyda-Grubbs Katalysator 1. Generation (1,3-Bis-(2,4,6-trimethylphenyl)-2-imidazolidinyliden)dichloro(o-isopropoxyphenyl-methylen)ruthenium und 2,8 mg (0,026 mmol) 1,4-Benzochinon eingewogen. Anschließend werden 500 mg (0,86 mmol) des zuvor hergestellten monomergebundenen Antioxidans und 5 mg 10-Methylundecenoat in 5 ml Toluol gelöst und in den Reaktionskolben gespritzt. Der Kolben wird in ein 60°C heißes Ölbad getaucht und das Reaktionsgemisch wird 8 h unter N₂ gerührt. Die Produktaufarbeitung erfolgt durch Fällung in kaltem Methanol. Nach Abtrennung in der Zentrifuge erhält man als Produkt ein grünes, wachsartiges Polymer.

Zur Mischung von Polypropylen mit dem polymergebundenen Antioxidantien wird ein Laborextruder mit einer Doppelschnecke eingesetzt. In einem typischen Experiment werden 5,00 g nichtstabilisiertes Polypropylen und 30-50 mg polymergebundene Antioxidantien eingesetzt. Die beiden Polymere werden zur Mischung bei 220°C unter N₂ für 10 min im Kreis geführt, danach wird die Polymerschmelze ausgetragen und im Wasser abgekühlt.

Mit Hilfe eines Laborextruders wird der gewonnene Stabilisator aus immobilisierten Antioxidantien zu Polypropylen zugemischt. Beim eingesetzten Polypropylen handelt es sich um ein nichtstabilisiertes Produkt mit einem MFI von 0,28. Bei der Compoundierung beträgt der Gewichtsanteil der eingesetzten Menge an polymergebundenen Antioxidantien zwischen 0,4 und 0,8 Gew.%. Neben den polymergebundenen Antioxidantien wurden keine weiteren Additive, das heißt auch keine Prozessstabilisatoren, zugesetzt.

Die Stabilisierung des Polypropylens wird anschließend in einem Standardverfahren zur Analyse der thermischen Stabilität von Polymeren (Oxidative Induction Time OIT) mit Hilfe eines Messverfahrens zur Bestimmung der Wärmeaufnahme oder -abgabe einer Probe (Differential Scanning Calorimetry) untersucht. Es wird eine statische OIT-Messung mit Sauerstoff als Spülgas bei 185°C gewählt. Bei nichtstabilisiertem Polypropylen beginnt die Oxidationsreaktion sofort nach der Umstellung des Spülgases von Stickstoff auf Sauerstoff. Beim stabilisierten Produkt verzögern die zugesetzten Antioxidantien den Beginn der Oxidation des Polymers um zumindest OIT = 15 min.

## Patentansprüche

1. Stabilisator für Polyolefine unter Verwendung phenolischer Antioxidantien, **dadurch gekennzeichnet, dass** die phenolischen Antioxidantien nach der Strukturformel 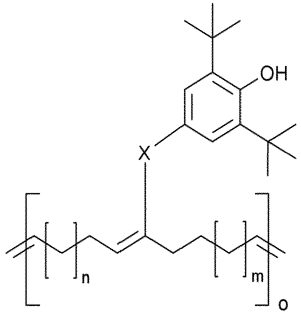 als Seitenketten an ein Polymer gebunden sind, wobei
X für [-CH₂-Y-COCH=CH-], [-CH₂-Y-CO-(CH₂)ₚ-] oder [-CH₂-Y-(CH₂)ₚ-] mit Y = S, O oder NH und mit p = 0 - 10 steht und
n = 1 - 8, m = 1 - 8 und o = 5 - 100 sind.

2. Stabilisator nach Anspruch 1, **dadurch gekennzeichnet, dass** die phenolischen Antioxidantien eine 3,5-Di-tert-butyl-4-hydroxyzimtsäure sind.

3. Stabilisator nach Anspruch 1 oder 2, **dadurch gekennzeichnet, dass** die phenolischen Antioxidantien eine 3-(3,5-Di-tert-butyl-4-hydroxyphenyl)propionsäure sind.

4. Verfahren zum Herstellen eines Stabilisators nach einem der Ansprüche 1 bis 3, **dadurch gekennzeichnet, dass** die phenolischen Antioxidantien an die funktionellen Gruppen einer Polymerkette angekoppelt werden, die durch eine acyclische Dienmetathese-Polymerisation eines Dienderivats erhalten wird.

5. Verfahren zum Herstellen eines Stabilisators nach einem der Ansprüche 1 bis 3, **dadurch gekennzeichnet, dass** die phenolischen Antioxidantien zunächst an α,ω-Dien-Monomere angekoppelt werden, bevor die erhaltenen, an die α,ω-Dien-Monomere angekoppelten Antioxidansstrukturen durch eine acyclische Dienmetathese-Polymerisation zu einer Polymerkette umgesetzt werden.

6. Verfahren nach Anspruch 4 oder 5, **dadurch gekennzeichnet, dass** zur Synthese der für die acyclische Dienmetathese-Polymerisation erforderlichen Dienderivate Fettsäurederivate auf der Basis von Pflanzenölen eingesetzt werden.

7. Verfahren nach Anspruch 6, **dadurch gekennzeichnet, dass** als Fettsäurederivat Rizinusöl eingesetzt wird.

## Claims

1. Stabilizer for polyolefins using phenolic antioxidants, **characterised in that** the phenolic antioxidants according to the structural formula 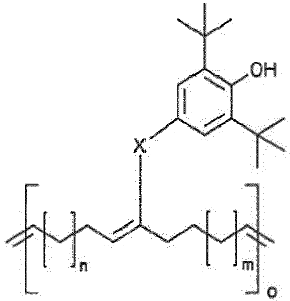 are bound as side chains to a polymer, wherein
X is [-CH₂-Y-COCH=CH-], [-CH₂-Y-CO-(CH₂)ₚ-], or [-CH₂Y-(CH₂)ₚ-] where Y = S, O, or NH and where p = 0-10 and n = 1-8, m = 1-8, and o = 5-100.

2. Stabilizer as claimed in claim 1, **characterised in that** the phenolic antioxidants are a 3,5-di-tert-butyl-4-hydroxy cinnamic acid.

3. Stabilizer as claimed in claim 1 or 2, **characterised in that** the phenolic antioxidants are a 3-(3,5-di-tert-butyl-4-hydroxyphenyl) propionic acid.

4. Method for preparing a stabilizer as claimed in any one of claims 1 to 3, **characterised in that** the phenolic antioxidants are coupled to the functional groups of a polymer chain which is obtained by an acyclic diene metathesis polymerization of a diene derivative.

5. Method for preparing a stabilizer as claimed in any one of claims 1 to 3, **characterised in that** the phenolic antioxidants are first coupled to α,ω-diene monomers, before the obtained antioxidant structures, which are coupled to the α,ω-diene monomers, are converted by an acyclic diene metathesis polymerization into a polymer chain.

6. Method as claimed in claim 4 or 5, **characterised in that** fatty acid derivatives based on vegetable oils are used for the synthesis of the diene derivatives required for the acyclic diene metathesis polymerization.

7. Method as claimed in claim 6, **characterised in that** castor oil is used as the fatty acid derivative.

## Revendications

1. Agent de stabilisation de polyoléfines à base d'antioxydants phénoliques, **caractérisé en ce que** les antioxydants phénoliques, de formule développée, 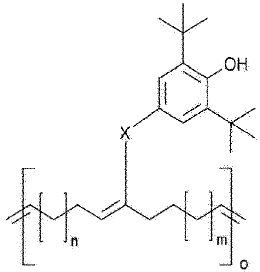 sont liés en tant que chaînes latérales à un polymère, X représentant un groupe [-CH2-Y-COCH=CH-], [-CH2-Y-CO-(CH2)ₚ-] ou [-CH2-Y-(CH2)ₚ-], où Y est S, O ou NH et p a une valeur comprise entre 0 et 10, n a une valeur comprise entre 1 et 8, m a une valeur comprise entre 1 et 8 et o a une valeur comprise entre 5 et 100.

2. Agent de stabilisation selon la revendication 1, **caractérisé en ce que** les antioxydants phénoliques sont un acide hydroxycinnamique 3,5-di-tert-butyl-4.

3. Agent de stabilisation selon la revendication 1 ou 2, **caractérisé en ce que** les antioxydants phénoliques sont un acide hydroxyphényl-propionique 3-3,5-di-tert-butyl-4.

4. Procédé pour fabriquer un agent de stabilisation selon l'une des revendications 1 à 3, **caractérisé en ce que** les antioxydants phénoliques sont couplés à des groupes fonctionnels d'une chaîne de polymères, qui est obtenue par une polymérisation par métathèse des diènes acyclique d'un dérivé de diène.

5. Procédé pour fabriquer un agent de stabilisation selon l'une des revendications 1 à 3, **caractérisé en ce que** les antioxydants phénoliques sont, en premier lieu, couplés à des monomères diéniques α,ω, avant que les structures d'antioxydants obtenues, couplées à des monomères diéniques α,ω soient transformées par une polymérisation par métathèse des diènes acycliques en une chaîne de polymères.

6. Procédé selon la revendication 4 ou 5, **caractérisée en ce que** des dérivés d'acides gras, à base d'huiles végétales, sont utilisés pour la synthétise des dérivés de diènes, nécessaires à la polymérisation par métathèse des diènes acycliques.

7. Procédé selon la revendication 6, **caractérisé en ce qu'**est utilisée de l'huile de ricin en tant que dérivé d'acide gras.
